(19) Europäisches Patentamt / European Patent Office / Office européen des brevets

(11) **EP 4 618 222 A1**

(12) **EUROPEAN PATENT APPLICATION**
published in accordance with Art. 153(4) EPC

(43) Date of publication:
**17.09.2025 Bulletin 2025/38**

(21) Application number: **23925763.7**

(22) Date of filing: **09.03.2023**

(51) International Patent Classification (IPC):
**H01M 10/0567** (2010.01)    **H01M 10/0569** (2010.01)
**H01M 4/38** (2006.01)    **H01M 10/0525** (2010.01)

(52) Cooperative Patent Classification (CPC):
**H01M 4/38; H01M 10/0525; H01M 10/0567;
H01M 10/0569;** Y02E 60/10

(86) International application number:
**PCT/CN2023/080402**

(87) International publication number:
**WO 2024/183044 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
(Hong Kong) Limited
Hong Kong (HK)**

(72) Inventors:
• **ZHANG, Cuiping
  Ningde, Fujian 352100 (CN)**
• **HAN, Changlong
  Ningde, Fujian 352100 (CN)**
• **FAN, Peng
  Ningde, Fujian 352100 (CN)**

(74) Representative: **Gong, Jinping
CocreateIP
Neumarkter Straße 21
81673 München (DE)**

(54) **SECONDARY BATTERY AND ELECTRICAL APPARATUS**

(57)    A secondary battery and an electrical device are disclosed, which relate to the field of batteries. The secondary battery includes a negative electrode active material and an electrolyte solution. A mass percentage of a silicon-containing substance in the negative electrode active material is W1%, the electrolyte solution includes fluorinated cyclic carbonate, a mass percentage of the fluorinated cyclic carbonate in the electrolyte solution is W2%, and $0.1W1 \leq W2 \leq 0.7W1$.

**Description**

**TECHNICAL FIELD**

This application relates to the technical field of lithium batteries, and specifically, to a secondary battery and an electrical device.

**BACKGROUND**

Lithium-ion batteries have attracted much attention because of high specific energy, long cycle life, low self-discharge, and good safety performance. Currently, the application of lithium-ion batteries has penetrated into all aspects of daily life such as cameras, notebook computers, and electric vehicles.

To improve an energy density of a lithium-ion battery, a currently common practice is to increase nickel content of a positive electrode to increase a gram capacity of the positive electrode, and correspondingly, silicon is doped in a negative electrode to increase a gram capacity of the negative electrode. After being intercalated with lithium, silicon has a volume increased to 300% of the original volume. An SEI film on a surface is damaged, and exposes a fresh interface, and an electrolyte solution continues to undergo a reduction reaction on the interface. As a result, both the electrolyte solution and active lithium are consumed, cycle performance and storage performance of the battery are degraded.

**SUMMARY**

A main objective of this application is to provide a secondary battery and an electrical device, to optimize cycle performance and storage performance of the secondary battery.

According to a first aspect, this application provides a secondary battery, including a negative electrode active material and an electrolyte solution. The negative electrode active material includes a silicon-containing substance, a mass percentage of the silicon-containing substance in the negative electrode active material is W1%, the electrolyte solution includes fluorinated cyclic carbonate, a mass percentage of the fluorinated cyclic carbonate in the electrolyte solution is W2%, and $0.1W1 \leq W2 \leq 0.7W1$.

Therefore, due to addition of the silicon-containing substance in the negative electrode active material, a volume expands and contracts violently, an SEI film on a surface is damaged, and exposes a fresh interface. When content W2% of the fluorinated cyclic carbonate in the electrolyte solution and content of negative electrode silicon satisfy that $0.1W1 \leq W2 \leq 0.7W1$, the fluorinated cyclic carbonate can effectively form a film on the surface of the silicon-containing substance, and rupture does not occur. When W2 is less than 0.1W1, W2 is too small, and due to a film-forming amount, the entire surface of the silicon-containing substance cannot be effectively covered. When W2 is greater than 0.7W1, although a film can be effectively formed on the interface of the silicon-containing substance, excess fluorocarbonate that does not participate in film formation is prone to oxidation and gas production. When the content of the fluorinated cyclic carbonate in the electrolyte solution and the content of the silicon-containing substance at the negative electrode satisfy the foregoing specific relationship, a film can be effectively formed on the surface of the silicon-containing substance, and the interface rupture can be suppressed, thereby prolonging a cycle life and a storage life of the battery.

In some embodiments, $1\% \leq W1\% \leq 50\%$, and it is found by the inventor through research that, when W1% is less than 1%, contribution of silicon to a capacity of the negative electrode is too small; and when W1% is greater than 50%, volume expansion of the negative electrode during charging is too large, and consequently, the interface rupture cannot be effectively suppressed by using the electrolyte solution. Further, $2\% \leq W1\% \leq 25\%$, and the cycle life and the storage life of the battery can be further prolonged within the foregoing range.

In some embodiments, $0.5\% \leq W2\% \leq 25\%$, and further, $1\% \leq W2\% \leq 20\%$. The content W2% of the fluorinated cyclic carbonate in the electrolyte solution is within the foregoing ranges, so that a film can be effectively formed on the surface of the silicon-containing substance, and the interface rupture can be suppressed, thereby prolonging the cycle life and the storage life of the battery.

In some embodiments, the electrolyte solution further includes $LiPF_6$ and fluorine-containing sulfonimide lithium, a molar concentration of $LiPF_6$ in the electrolyte solution is defined as C1, a molar concentration of the fluorine-containing sulfonimide lithium is defined as C2, and $0.25 \leq C1/C2 \leq 5$. When the concentrations of the fluorine-containing sulfonimide lithium and $LiPF_6$ that are in the electrolyte solution satisfy the foregoing relationship, generation of HF in the electrolyte solution can be reduced, and damage by HF to a negative electrode interface can be alleviated, without causing corrosion of an aluminum foil. In this way, the cycle life and the storage life of the battery can be further prolonged.

In some embodiments, $0.2 \text{ mol/L} \leq C1 \leq 1 \text{ mol/L}$; and/or, $0.2 \text{ mol/L} \leq C2 \leq 0.9 \text{ mol/L}$. When C1 and C2 are within the foregoing ranges, the generation of HF in the electrolyte solution can be reduced, and the damage by HF to the negative electrode interface can be alleviated, without causing corrosion of the aluminum foil. This can further prolong the cycle life and the storage life of the battery.

In some embodiments, the fluorine-containing sulfonimide lithium includes at least one of lithium bis(fluorosulfonyl)imide, lithium bis(pentafluoroethyl)sulfonimide, lithium fluoro(trifluoromethyl)sulfonimide, and lithium bis(trifluoromethyl)sulfonimide. The foregoing substances are used, so that the generation of HF in the electrolyte solution can be reduced, and the damage by HF to the negative electrode interface can be alleviated, without causing corrosion of the aluminum foil, thereby further prolonging the cycle life and the storage life of the battery.

In some embodiments, the fluorinated cyclic carbonate includes at least one of fluoroethylene carbonate and difluoroethylene carbonate, so that a film can be effectively formed on the silicon surface, and the interface rupture can be suppressed, thereby prolonging the life of the secondary battery. Further, the fluorinated cyclic carbonate includes the fluoroethylene carbonate, so that the life of the secondary battery can be further prolonged.

In some embodiments, the silicon-containing substance includes at least one of silicon dioxide, silicon, and silicon monoxide, so that a film can be effectively formed on the silicon surface, and the interface rupture can be suppressed, thereby prolonging the life of the secondary battery.

In some embodiments, the electrolyte solution further includes a solvent, and the solvent includes at least one of ethylene carbonate, propylene carbonate, fluorobenzene, dimethyl carbonate, diethyl carbonate, ethyl methyl carbonate, ethyl acetate, propyl acetate, and methyl formate. The foregoing substances are excellent organic solvents, and at least one of the foregoing substances is used, so that the cycle life and the storage life of the battery can be prolonged.

In some embodiments, the electrolyte solution further includes the solvent, and a mass percentage of the solvent in the electrolyte solution ranges from 20% to 60%. If the solvent is at the mass percentage, the cycle life and the storage life of the battery can be prolonged.

In some embodiments, the electrolyte solution further includes an additive, and the additive includes at least one of vinylene carbonate, vinyl sulfate, 1,3-propane sultone, lithium difluoro(oxalato)borate, lithium bis(oxalato)borate, tris(trimethylsilyl)borate, tris(trimethylsilyl)phosphate, and lithium difluorophosphate. The foregoing additive has an effect of assisting in film formation.

In some embodiments, the negative electrode active material further includes at least one of natural graphite, artificial graphite, mesocarbon microbeads, hard carbon, and soft carbon. Silicon may be doped in the foregoing carbon-based material, so that an energy density of the secondary battery can be effectively improved.

According to a second aspect, this application provides an electrical device, including the secondary battery described in the foregoing embodiments.

## DETAILED DESCRIPTION

To make the objectives, technical solutions, and advantages of the embodiments of the present invention more comprehensible, the following clearly and completely describes the technical solutions in the embodiments of the present invention. If specific conditions are not indicated in the embodiments, it shall be carried out in accordance with the conventional conditions or the conditions recommended by the manufacturer. Where no manufacturer is indicated for the reagents or instruments used, they are conventional products that can be commercially obtained.

It is to be noted that if specific conditions are not indicated in the embodiments, it shall be carried out in accordance with the conventional conditions or the conditions recommended by the manufacturer. Where no manufacturer is indicated for the reagents or instruments used, they are conventional products that can be commercially obtained. In addition, the meaning of "and/or" in this specification includes three parallel schemes, and "A and/or B" is used as an example, including a scheme in which A satisfies, or a scheme in which B satisfies, or a scheme in which both A and B satisfy. In addition, the technical solutions of different embodiments may be combined with each other to the extent practicable by a person of ordinary skilled in the art. When a combination of technical solutions is contradictory or impractical, the combination of technical solutions is considered to be nonexistent and fall outside the scope of protection claimed by the present invention. All other embodiments obtained by a person of ordinary skill in the art based on embodiments of the present invention without creative efforts shall fall within the protection scope of the present invention.

Lithium-ion batteries have attracted much attention because of high specific energy, long cycle life, low self-discharge, and good safety performance. Currently, the application of lithium-ion batteries has penetrated into all aspects of daily life such as cameras, notebook computers, and electric vehicles.

To improve an energy density of a lithium-ion battery, a currently common practice is to increase nickel content of a positive electrode to increase a gram capacity of the positive electrode, and correspondingly, silicon is doped in a negative electrode to increase a gram capacity of the negative electrode. After being intercalated with lithium, silicon has a volume increased to 300% of the original volume. An SEI film on a surface is damaged, and exposes a fresh interface, and an electrolyte solution continues to undergo a reduction reaction on the interface. As a result, both the electrolyte solution and active lithium are consumed, cycle performance and storage performance of the battery are degraded.

In view of this, researchers in the art have made improvement. For example, in the related art, an additive is added to the electrolyte solution to alleviate film formation. For example, the negative electrode is a silicon-based negative electrode, and the electrolyte solution includes LiFSI and $LiPF_6$ (where a content ratio ranges from 1:1 to 1:3 (mol/mol)), and solvent diethyl carbonate (DEC): fluoroethylene carbonate (FEC) in the electrolyte solution=70:30-95:5. However, in this method, a silicon system is used. Although the FEC can alleviate film formation to some extent, vinylene carbonate (VC) produced through decomposition of the FEC is not resistant to oxidation, and particularly, is prone oxidation and gas production at the positive electrode, causing a battery core to swell.

Based on this, in view of the foregoing problems, the author has developed, through a lot of experiments and creative thinking, a novel electrolyte solution and a battery including the electrolyte solution, so that a cycle life and a storage life of the battery can be significantly prolonged.

Specifically, this application provides a secondary battery, including a negative electrode active material and an electrolyte solution. The negative electrode active material includes a silicon-containing substance, a mass percentage of the silicon-containing substance in the negative electrode active material is W1%, the electrolyte solution includes fluorinated cyclic carbonate, a mass percentage of the fluorinated cyclic carbonate in the electrolyte solution is W2%, and $0.1W1 \leq W2 \leq 0.7W1$. The secondary battery provided in this application has the following beneficial effects:

Due to addition of the silicon-containing substance in the negative electrode active material, a volume expands and contracts violently, an SEI film on a surface is damaged, and exposes a fresh interface. When content W2% of the fluorinated cyclic carbonate in the electrolyte solution and content of negative electrode silicon satisfy that $0.1W1 \leq W2 \leq 0.7W1$, the fluorinated cyclic carbonate can effectively form a film on the surface of the silicon-containing substance, and rupture does not occur. When W2 is less than 0.1W1, W2 is too small, and due to a film-forming amount, the entire surface of the silicon-containing substance cannot be effectively covered. When W2 is greater than 0.7W1, although a film can be effectively formed on the interface of the silicon-containing substance, excess fluorocarbonate that does not participate in film formation is prone to oxidation and gas production. When the content of the fluorinated cyclic carbonate in the electrolyte solution and the content of the silicon-containing substance at the negative electrode satisfy the foregoing specific relationship, a film can be effectively formed on the surface of the silicon-containing substance, and the interface rupture can be suppressed, thereby prolonging a cycle life and a storage life of the battery.

In addition, in this application, the fluorinated cyclic carbonate in the electrolyte solution can greatly improve stability of a metallic lithium negative electrode.

It may be understood that, in this application, a type of the silicon-containing substance is not limited, and any silicon-containing element falls within the protection scope of this application. In the embodiments of this application, the silicon-containing substance may be elemental silicon, silicon dioxide, silicon monoxide, or the like, so that a film can be effectively formed on the silicon surface, and the interface rupture can be suppressed, thereby prolonging the life of the secondary battery.

In some embodiments, $1\% \leq W1\% \leq 50\%$, for example, W1% may be 1%, 5%, 10%, 15%, 20%, 25%, 30%, 35%, 40%, 45%, or 50%. It is found by the inventor through research that, when a silicon doping amount of the negative electrode is less than 1%, contribution of silicon to a capacity of the negative electrode is too small; and when the doping amount is greater than 50%, volume expansion of the negative electrode during charging is too large, and consequently, the interface rupture cannot be effectively suppressed by using the electrolyte solution.

Further, $2\% \leq W1\% \leq 25\%$, for example, W1% may be 2%, 5%, 8%, 10%, 12%, 16%, 18%, 21%, 23%, 24%, or 25%, and the cycle life and the storage life of the battery can be further prolonged within the foregoing range.

In some embodiments, $0.5\% \leq W2\% \leq 25\%$, for example, W2 may be 0.5%, 1%, 5%, 10%, 15%, 20%, or 25%, and further, $1\% \leq W2\% \leq 20\%$, for example, W2 may be 1%, 2%, 4%, 9%, 12%, 17%, 22%, or 25%. The content W2% of the fluorinated cyclic carbonate in the electrolyte solution is within the foregoing ranges, so that a film can be effectively formed on the surface of the silicon-containing substance, and the interface rupture can be suppressed, thereby prolonging the cycle life and the storage life of the battery.

In some embodiments, the electrolyte solution further includes $LiPF_6$ and fluorine-containing sulfonimide lithium, a molar concentration of $LiPF_6$ in the electrolyte solution is defined as C1, a molar concentration of the fluorine-containing sulfonimide lithium is defined as C2, and $0.25 \leq C1/C2 \leq 5$. For example, C1/C2 may be equal to 0.25, 0.5, 1, 1.5, 2, 2.5, 3, 3.5, 4, 4.5, or 5. When a lithium salt in the electrolyte solution is $LiPF_6$, moisture released in an electrode plate reacts with $LiPF_6$, HF and $PF_5$ (Lewis acid) that are generated further damage the SEI film. Therefore, in this application, a part of $LiPF_6$ is replaced with the fluorine-containing sulfonimide lithium to reduce a probability of generation of HF and $PF_5$. When the concentrations of the fluorine-containing sulfonimide lithium and $LiPF_6$ that are in the electrolyte solution satisfy the foregoing relationship, generation of HF in the electrolyte solution can be reduced, and the damage by HF to a negative electrode interface can be alleviated, without causing corrosion of aluminum foil. In this way, the cycle life and the storage life of the battery can be further prolonged.

In some embodiments, 0.2 mol/L $\leq$ C1 $\leq$ 1 mol/L; and/or, 0.2 mol/L $\leq$ C2 $\leq$ 0. 9 mol/L, for example, C1 may be 0.2 mol/L, 0.3 mol/L, 0.4 mol/L, 0.5 mol/L, 0.6 mol/L, 0.7 mol/L, 0.8 mol/L, 0.9 mol/L, or 1 mol/L, and C2 may be 0.2 mol/L, 0.3 mol/L, 0.4 mol/L, 0.5 mol/L, 0.6 mol/L, 0.7 mol/L, 0.8 mol/L, or 0.9 mol/L. When C1 and C2 are within the foregoing ranges, the generation of HF in the electrolyte solution can be reduced, and the damage by HF to the negative electrode interface can be alleviated, without causing corrosion of the aluminum foil. This can further prolong the cycle life and the storage life of the battery.

In some embodiments, the fluorine-containing sulfonimide lithium includes at least one of lithium bis(fluorosulfonyl)imide, lithium bis(pentafluoroethyl)sulfonimide, lithium fluoro(trifluoromethyl)sulfonimide, and lithium bis(trifluoromethyl)sulfonimide. The foregoing substances are used, so that the generation of HF in the electrolyte solution can be reduced, and the damage by HF to the negative electrode interface can be alleviated, without causing corrosion of the aluminum foil, thereby further prolonging the cycle life and the storage life of the battery.

In some embodiments, the fluorinated cyclic carbonate includes at least one of fluoroethylene carbonate and difluoroethylene carbonate, so that a film can be effectively formed on the silicon surface, and the interface rupture can be suppressed, thereby prolonging the life of the secondary battery.

Further, the fluorinated cyclic carbonate includes the fluoroethylene carbonate. The fluoroethylene carbonate is a chemical substance, and has better performance in forming the SEI film, so that a compact structural layer is formed without increasing impedance. This can prevent further decomposition of the electrolyte solution, and improve a low-temperature property of the electrolyte solution, to further prolong the life of the secondary battery.

In some embodiments, the electrolyte solution further includes a solvent, and the solvent includes at least one of ethylene carbonate, propylene carbonate, fluorobenzene, dimethyl carbonate, diethyl carbonate, ethyl methyl carbonate, ethyl acetate, propyl acetate, and methyl formate. The foregoing substances are excellent organic solvents, and at least one of the foregoing substances is used, so that the cycle life and the storage life of the battery can be prolonged.

The ethylene carbonate (EC) is an organic solvent with excellent performance, can dissolve a variety of polymers, and is used in the electrolyte solution of the lithium battery. The propylene carbonate is an excellent medium for a high-energy battery and a capacitor and has stable properties. The dimethyl carbonate, briefly referred to as DMC, is a colorless, transparent, and pungent liquid at room temperature, with a relative density (d204) of 1.0694, a melting point of 4°C, a boiling point of 90.3°C, flash points of 21.7°C (open) and 16.7°C (closed), and a refractive index of 1.3687, and is flammable and non-toxic. The dimethyl carbonate can be mixed with almost all organic solvents such as alcohol, ketone, and ester at any ratio, and is slightly soluble in water. Compared with other methylated agents, the dimethyl carbonate is less toxic and is biodegradable. Ethyl methyl carbonate (Ethyl Methyl Carbonate) is also referred to as carbonic acid ethyl methyl ester, is a colorless and transparent liquid, insoluble in water, can be used for organic synthesis, and is an excellent solvent for an electrolyte solution of the lithium-ion battery.

In some embodiments, the electrolyte solution further includes the solvent, and a mass percentage of the solvent in the electrolyte solution ranges from 20% to 60%, for example, 20%, 25%, 30%, 35%, 40%, 45%, 50%, 55%, or 60%. If the solvent is at the mass percentage, the cycle life and the storage life of the battery can be prolonged.

In some embodiments, the electrolyte solution further includes an additive, and the additive includes at least one of vinylene carbonate, vinyl sulfate, 1,3-propane sultone, lithium difluoro(oxalato)borate, lithium bis(oxalato)borate, tris(trimethylsilyl)borate, tris(trimethylsilyl)phosphate, and lithium difluorophosphate. The foregoing additive has an effect of assisting in film formation.

In some embodiments, the negative electrode active material further includes at least one of natural graphite, artificial graphite, mesocarbon microbeads, hard carbon, and soft carbon. Silicon may be doped in the foregoing carbon-based material, so that an energy density of the secondary battery can be effectively improved.

The negative electrode active material, a conductive agent, a thickener, and a binder are dissolved in water and mixed well, to obtain a negative electrode slurry. The negative electrode slurry is coated on a negative electrode current collector, followed by cold pressing, trimming, slicing and slitting, and then drying under vacuum, to obtain a negative electrode plate.

The electrolyte solution may be prepared by using the following method:

In a glove box filled with argon (where water content<10 ppm, and oxygen content<1 ppm), the fluorinated cyclic carbonate and the additive are added to an organic solvent (for example, ethylene carbonate:ethyl methyl carbonate=3:7 W%/W%). After well mixing, an appropriate amount of $LiPF_6$ and an appropriate amount of fluorine-containing sulfonimide lithium (LiFSI) are slowly added to a non-aqueous organic solvent, and after the lithium salt is completely dissolved, a target electrolyte solution is obtained, that is, the electrolyte solution.

In some embodiments, the secondary battery further includes a positive electrode plate. The positive electrode plate includes a positive electrode material. The positive electrode material further includes a positive electrode active material, and the active material included in the positive electrode may independently be: (1) $LiNi_xCo_yN_zM_{1-x-y-z}O_2$, where N is selected from Mn and Al, M is selected from any one of Co, Ni, Mn, Mg, Cu, Zn, Al, Sn, B, Ga, Cr, Sr, V, and Ti, $0 \leq x < 1$, $0 \leq y \leq 1$, $0 \leq z \leq 1$, and $x+y+z \leq 1$; or (2) at least one of $LiMn_2O_4$, and $Li_2MnO_3 \cdot (1-a)LiPO_2$(P=Ni, Co, or Mn), where $0 < a < 1$, or a positive electrode material formed by mixing the foregoing two types of materials at any ratio. The positive electrode plate includes a positive electrode current collector and a positive electrode film layer arranged on at least one surface of the positive electrode current collector.

By way of example, the positive electrode current collector has two opposite surfaces in a thickness direction thereof, and the positive electrode film layer is arranged on either or both of the two opposite surfaces of the positive electrode current collector.

In some embodiments, the positive electrode current collector may be a metal foil or a composite current collector. For example, the metal foil may be an aluminum foil. The composite current collector may include a polymer material base layer and a metal layer formed on at least one surface of the polymer material base layer. The composite current collector may be formed by forming a metal material (e.g., aluminum, an aluminum alloy, nickel, a nickel alloy, titanium, a titanium alloy, silver, or a silver alloy) on a polymer material substrate (e.g., a substrate of polypropylene (PP), polyethylene terephthalate (PET), polybutylene terephthalate (PBT), polystyrene (PS), or polyethylene (PE)).

In some embodiments, the positive electrode plate may be prepared in the following manner. The components for preparing the positive electrode plate, such as the positive electrode active material, the conductive agent, the binder, and any other component, are dispersed in a solvent (e.g., N-methylpyrrolidone) to form a positive electrode slurry. The positive electrode slurry is coated on the positive electrode current collector, followed by drying, cold pressing, and other processes, to obtain the positive electrode plate.

The secondary battery further includes a separator. Specifically, the separator includes a base film and a coating layer coated on the base film, and the coating layer may further include an adhesive layer, a ceramic layer, and the like.

During charging and discharging of the battery, active ions are intercalated and deintercalated back and forth between the positive electrode plate and the negative electrode plate. The electrolyte serves to conduct ions between the positive electrode plate and the negative electrode plate. The separator is arranged between the positive electrode plate and the negative electrode plate, and mainly serves to prevent a short circuit between the positive electrode and the negative electrode while allowing the ions to pass through.

A battery cell may be prepared by a method commonly used in this field. For example, a preparation process includes: making an electrode assembly out of the positive electrode plate, the negative electrode plate, and the separator by a winding process or a laminating process, and then injecting an electrolyte solution into the electrode assembly, and sealing the electrode assembly to obtain the battery cell.

In some embodiments, the battery cell may include an outer package. The outer package may be configured to package the electrode assembly and the electrolyte.

In some embodiments, the outer package of the battery cell may be a hard shell, such as a hard plastic case, an aluminum shell, or a steel shell. The outer package of the battery cell may also be a soft package, such as a pouch-type soft package. The material of the soft package may be plastic, and examples of the plastic include polypropylene, polybutylene terephthalate, polybutylene succinate, and the like.

The shape of the battery cell is not particularly limited in this application, and may be a cylinder, a rectangle, or any other shape.

A specific representation form of the battery may be a battery module and a battery pack. There may be one or more battery cells included in the battery module, and a specific quantity may be selected by a person skilled in the art based on application and a capacity of the battery module.

The "battery module" is formed by electrically connecting a specific quantity of secondary batteries together and putting them into a frame to protect the battery cells from external impact, heat, vibration, and the like. A commonly used battery module generally includes two end plates, and a plurality of battery cells (lithium-ion batteries) are arranged between the two end plates. An end plate on which an output electrode of the battery module is arranged is also referred to as an output electrode end plate, and an end plate on which no output electrode of the battery module is arranged is also referred to as a non-output electrode end plate.

In some battery production and processing technologies, a plurality of battery cells are first integrated into a battery module, and then the battery module is packaged in a box body of a battery to form a battery pack. In the battery pack, one row of a plurality of battery modules may be packaged, or a plurality of rows of a plurality of battery modules may be packaged. The plurality of rows of the plurality of battery modules may be arranged in two rows and a plurality of columns, a plurality of rows and two columns, a plurality of rows and columns, or the like. A battery pack in which battery modules in two rows and in a plurality of columns are packaged is used as an example. A 1st end plate in each column is usually a head output electrode end plate, two adjacent end plates between two rows of battery modules are middle non-output electrode end plates, and a last end plate in each column is a tail non-output electrode end plate. The head output electrode end plate and one of the middle non-output electrode end plates belong to a 1st row of battery modules, and one of the middle non-output electrode end plates and the tail output electrode end plate belong to a 2nd row of battery modules.

According to a second aspect, this application provides an electrical device, including the secondary battery described in the foregoing embodiments.

The electrical device provided in this application includes, but is not limited to: a mobile phone, a portable apparatus, a laptop, an electromobile, an electric vehicle, a ship, a spacecraft, an electronic toy, an electric tool, etc. For example, the spacecraft includes an airplane, a rocket, a space shuttle, a spaceship and the like; the electronic toy includes a fixed or mobile electronic toy, such as a game console, an electric vehicle toy, an electric ship toy, an electric aircraft toy and the like; and the electric tool includes a metal-cutting power tool, a grinding power tool, an assembly power tool and a railway power tool, such as an electric drill, an electric grinder, an electric wrench, an electric screwdriver, an electric hammer, an electric impact drill, a concrete vibrator and an electric planer.

The electrical device provided in this application includes the secondary battery in the foregoing embodiments, and has all the beneficial effects of the secondary battery. Details are not described herein again.

**Examples**

The technical solutions of the present invention are further described in detail below with reference to specific embodiments. It may be understood that the following embodiments are merely intended to explain the present invention, but not to limit the present invention.

Parameter settings of the secondary battery in examples and comparative examples are shown in Table 1 below:

Table 1 Parameter settings of a secondary battery in examples and comparative examples

|  | W1% | W2% | W2/W1 | C1 (mol/L) | C2 (mol/L) | C1/C2 |
|---|---|---|---|---|---|---|
| Example 1 | 1% | 0.5% | 0.5 | 0.8 | 0.3 | 2.67 |
| Example 2 | 10% | 1% | 0.1 | 0.8 | 0.3 | 2.67 |
| Example 3 | 10% | 5% | 0.5 | 0.8 | 0.3 | 2.67 |
| Example 4 | 10% | 7% | 0.7 | 0.8 | 0.3 | 2.67 |
| Example 5 | 30% | 15% | 0.5 | 0.7 | 0.6 | 1.17 |
| Example 6 | 40% | 20% | 0.5 | 0.7 | 0.6 | 1.17 |
| Example 7 | 50% | 25% | 0.5 | 0.7 | 0.6 | 1.17 |
| Example 8 | 10% | 6% | 0.6 | 0.2 | 0.8 | 0.25 |
| Example 9 | 10% | 6% | 0.6 | 1 | 0.2 | 5.00 |
| Example 10 | 10% | 1% | 0.1 | 0.2 | 0.8 | 0.25 |
| Example 11 | 50% | 25% | 0.5 | 0.1 | 0.9 | 0.11 |
| Comparative Example 1 | 5% | 0.4% | 0.08 | 0.1 | 0.9 | 0.11 |
| Comparative Example 2 | 5% | 0.4% | 0.08 | 0.7 | 0.6 | 1.17 |

A preparation process of the lithium-ion battery in the examples and comparative examples is as follows:

[Preparation of an electrolyte solution]

In a glove box filled with argon (where water content<10 ppm, and oxygen content<1 ppm), the fluoroethylene carbonate and lithium difluorophosphate were added to an organic solvent (ethylene carbonate:ethyl methyl carbonate=3:7 W%/W%). After well mixing, an appropriate amount of $LiPF_6$ and an appropriate amount of LiFSI were slowly added to a non-aqueous organic solvent, and after a lithium salt was completely dissolved, a target electrolyte solution was obtained, that is, the electrolyte solution.

[Preparation of a positive electrode plate]

A positive electrode active material $LiNi_{0.5}Co_{0.2}Mn_{0.3}O_2$, a Super P conductive agent, and a polyvinylidene fluoride (PVDF) binder were made into a positive electrode slurry in N-methylpyrrolidone (NMP). Solid content of the positive electrode slurry was 50wt%, and a mass ratio of $LiNi_{0.5}Co_{0.2}Mn_{0.3}O_2$, Super P, to PVDF that are in solid components was 8:1:1. The positive electrode slurry was coated on an aluminum foil of a positive electrode current collector and dried at 85°C followed by cold pressing, trimming, slicing and slitting, and then further dried under vacuum at 85°C for 4h, to obtain the positive electrode plate.

[Preparation of a negative electrode plate]

Negative electrode active materials graphite and silicon were well mixed with a conductive agent Super P, a CMC thickener, and a styrene-butadiene rubber (SBR) binder were well mixed in deionized water, to obtain a negative electrode slurry. Solid content of the negative electrode slurry was 30wt%, and a mass ratio of graphite, Super P, CMC, to the styrene-butadiene rubber (SBR) binder in solid components was 80:15:3:2. The negative electrode slurry was coated on a copper foil of a positive electrode current collector and dried at 85°C followed by cold pressing, trimming, slicing and slitting, and then further dried under vacuum at 120°C for 12h, to obtain the negative electrode plate.

[Preparation of a lithium-ion battery]

A polyethylene (PE) film with a thickness of 16 μm was used as a separator. The prepared positive electrode plate, separator, and negative electrode plate were laminated in order, so that the separator was located between the positive electrode plate and the negative electrode plate to separate the positive electrode plate from the negative electrode plate, wound to obtain a bare battery core, and welded with tabs. The bare battery core was placed in an outer package. The prepared electrolyte solution was injected into a dried battery core, followed by packaging, standing, formation, shaping, capacity testing, and the like. In this way, the preparation of the lithium-ion battery was completed (where a pouch lithium-ion battery had a thickness of 4.0 mm, a width of 60 mm, and a length of 140 mm).

C1/C2 in Example 11 was not within the range of the examples of this application, both W2/W1 and C1/C2 in Comparative Example 1 were not within the range of the examples of this application, and W2/W1 in Comparative Example 2 was not within the range of the examples of this application.

[Test of battery performance]

(1) Cycle performance test for the lithium-ion battery

An ambient temperature was adjusted to 25°C., the lithium-ion battery was charged to 4.25 V at 1 C, then charged to 0.05 C at a constant voltage, left standing for 10 min, and discharged to 2.8 V at 1 C, and a discharge capacity was recorded as C0. 300 cycles were performed according to the foregoing charging and discharging process, a discharge capacity at a $300^{th}$ cycle was defined as C1, and a cycle capacity retention rate of the lithium-ion battery was equal to CO/C1*100%.

(2) High-temperature storage life test for the lithium-ion battery

At 25°C, the lithium-ion battery was charged to 4.25 V at a constant current of 1 C, then charged to a current of 0.05 C at a constant voltage, left standing for 10 min, and discharged to 2.8 V at 1 C, and a discharge capacity was recorded as D0. Then, the lithium-ion battery was placed in a thermostat at 60°C, kept for 60 days, and taken out. After a surface temperature of the lithium-ion battery recovered to room temperature, the lithium-ion battery was discharged to 2.8 V at 1 C, then charged to 4.25 V at 1 C, charged to 0.05 C at a constant voltage, left standing for 10 min, and discharged to 2.8 V at 1 C, and a discharge capacity was recorded as D1. The high-temperature storage life of the lithium-ion battery was equal to D1/DO* 100%.

Test results are shown in Table 2.

Table 2 Performance measurement on a secondary battery in examples and comparative examples

|  | Cycle performance | Storage life |
|---|---|---|
| Example 1 | 95.30% | 94.20% |
| Example 2 | 94.90% | 93.80% |
| Example 3 | 96.50% | 96.10% |
| Example 4 | 94.50% | 93.20% |
| Example 5 | 96.30% | 95.30% |
| Example 6 | 96.10% | 95.00% |
| Example 7 | 95.00% | 93.90% |
| Example 8 | 93.80% | 93.00% |
| Example 9 | 93.00% | 90.80% |
| Example 10 | 90.30% | 89.60% |
| Example 11 | 89.50% | 87.30% |
| Comparative Example 1 | 80.40% | 76.90% |
| Comparative Example 2 | 85.40% | 83.70% |

It can be learned from the test results in Table 2 that, compared with the cycle performance and the high-temperature storage life tested in Comparative Example 1 and Comparative Example 2, comprehensive performance in Examples 1 to 11 is improved. It indicates that when the content of the fluorinated cyclic carbonate in the electrolyte solution and the content of negative electrode silicon satisfy a relationship, and the lithium salt in the electrolyte solution satisfies a relationship, comprehensive performance of the battery core is excellent.

In Example 11, the content of the lithium salt in the electrolyte solution does not satisfy a corresponding relationship of $0.25 \leq C1/C2 \leq 5$, and high-content HF is produced in the electrolyte solution, which may further damage the SEI film, finally resulting in a violent reduction reaction of the electrolyte solution on the negative electrode interface, and consuming more active lithium. In this case, both the cycle life and the storage life of the electrolyte solution are poorer in comparison with the examples. However, the content of the fluorinated cyclic carbonate and the content of negative electrode silicon satisfy a specific relationship of $0.1W1 \leq W2 \leq 0.7W1$, and in this case, both the cycle life and the storage life are better in comparison with Comparative example 1 and Comparative example 2.

In Comparative Example 1, the content of the fluorinated cyclic carbonate and the content of negative electrode silicon do not satisfy the specific relationship of $0.1W1 \leq W2 \leq 0.7W1$, the fluorinated cyclic carbonate and negative electrode silicon cannot effectively participate in film formation on a surface of a silicon anode, and during charging, the negative electrode expands, and the SEI ruptures. In addition, the content of the lithium salt in the electrolyte solution does not satisfy the corresponding relationship of $0.25 \leq C1/C2 \leq 5$, and high-content HF is produced in the electrolyte solution, which further damages the SEI film, finally resulting in a violent reduction reaction of the electrolyte solution on the negative electrode interface, and consuming more active lithium. In this case, the cycle life and the storage life are the worst in comparison with the examples.

In Comparative Example 2, the content of the fluorinated cyclic carbonate and the content of negative electrode silicon do not satisfy the specific relationship of $0.1W1 \leq W2 \leq 0.7W1$, the fluorinated cyclic carbonate and negative electrode silicon cannot effectively participate in film formation on a surface of a silicon anode, and during charging, the negative electrode expands, and the SEI ruptures. In this case, the cycle life and the storage life are worse in comparison with the examples. However, the content of the lithium salt in the electrolyte solution satisfies the corresponding relationship of $0.25 \leq C1/C2 \leq 5$, and in this case, the cycle life and the storage life are better in comparison with Comparative Example 1.

In conclusion, in the secondary battery provided in this application, when the content W2% of the fluorinated cyclic carbonate in the electrolyte solution and the content of negative electrode silicon satisfy that $0.1W1 \leq W2 \leq 0.7W1$, a film can be effectively formed on the surface of the silicon-containing substance. When W2 is less than 0.1W1, W2 is too small, and due to a film-forming amount, the entire surface of the silicon-containing substance cannot be effectively covered. When W2 is greater than 0.7W1, although a film can be effectively formed on the interface of the silicon-containing substance, excess fluorocarbonate that does not participate in film formation is prone to oxidation and gas production. When the content of the fluorinated cyclic carbonate in the electrolyte solution and the content of the silicon-containing substance at the negative electrode satisfy the foregoing specific relationship, a film can be effectively formed on the surface of the silicon-containing substance, and the interface rupture can be suppressed, thereby prolonging a cycle life and a storage life of the battery.

The foregoing descriptions are merely preferred embodiments of the present invention, but are not intended to limit the patent scope of the present invention. A person skilled in the art may make various alterations and variations to the present invention. Any modification, equivalent replacement, or improvement made within the spirit and principle of the present invention shall fall within the patent scope of the present invention.

**Claims**

1. A secondary battery, comprising a negative electrode active material and an electrolyte solution, wherein the negative electrode active material comprises a silicon-containing substance, a mass percentage of the silicon-containing substance in the negative electrode active material is W1%, the electrolyte solution comprises fluorinated cyclic carbonate, a mass percentage of the fluorinated cyclic carbonate in the electrolyte solution is W2%, and $0.1W1 \leq W2 \leq 0.7W1$.

2. The secondary battery according to claim 1, wherein $1\% \leq W1\% \leq 50\%$; and/or

$$0.5\% \leq W2\% \leq 25\%.$$

3. The secondary battery according to claim 1, wherein $2\% \leq W1\% \leq 25\%$; and/or

$$1\% \leq W2\% \leq 20\%.$$

4. The secondary battery according to any one of claims 1 to 3, wherein the electrolyte solution further comprises $LiPF_6$ and fluorine-containing sulfonimide lithium, a molar concentration of $LiPF_6$ in the electrolyte solution is defined as C1, a molar concentration of the fluorine-containing sulfonimide lithium is defined as C2, and $0.25 \leq C1/C2 \leq 5$.

5. The secondary battery according to claim 4, wherein $0.2$ mol/L $\leq C1 \leq 1$ mol/L; and/or

$$0.2 \text{ mol/L} \leq C2 \leq 0.9 \text{ mol/L}.$$

6. The secondary battery according to claim 4 or 5, wherein the fluorine-containing sulfonimide lithium comprises at least one of lithium bis(fluorosulfonyl)imide, lithium bis(pentafluoroethyl)sulfonimide, lithium fluoro(trifluoromethyl)sulfonimide, and lithium bis(trifluoromethyl)sulfonimide.

7. The secondary battery according to any one of claims 1 to 6, wherein the fluorinated cyclic carbonate comprises at least one of fluoroethylene carbonate and difluoroethylene carbonate; and/or
the silicon-containing substance comprises at least one of silicon dioxide, silicon, and silicon monoxide.

8. The secondary battery according to any one of claims 1 to 7, wherein the electrolyte solution further comprises a solvent, and the solvent comprises at least one of ethylene carbonate, propylene carbonate, fluorobenzene, dimethyl carbonate, diethyl carbonate, ethyl methyl carbonate, ethyl acetate, propyl acetate, and methyl formate.

9. The secondary battery according to any one of claims 1 to 8, wherein the electrolyte solution further comprises the solvent, and a mass percentage of the solvent in the electrolyte solution ranges from 20% to 60%.

10. The secondary battery according to any one of claims 1 to 9, wherein the electrolyte solution further comprises an additive, and the additive comprises at least one of vinylene carbonate, vinyl sulfate, 1,3-propane sultone, lithium difluoro(oxalato)borate, lithium bis(oxalato)borate, tris(trimethylsilyl)borate, tris(trimethylsilyl)phosphate, and lithium difluorophosphate.

11. The secondary battery according to any one of claims 1 to 10, wherein the negative electrode active material further comprises at least one of natural graphite, artificial graphite, mesocarbon microbeads, hard carbon, and soft carbon.

12. An electrical device, comprising the secondary battery according to any one of claims 1 to 11.

## INTERNATIONAL SEARCH REPORT

| International application No. |
| --- |
| **PCT/CN2023/080402** |

**A.    CLASSIFICATION OF SUBJECT MATTER**

H01M10/0567(2010.01)i;  H01M10/0569(2010.01)i;  H01M4/38(2006.01)i;  H01M10/0525(2010.01)i

According to International Patent Classification (IPC) or to both national classification and IPC

**B.    FIELDS SEARCHED**

Minimum documentation searched (classification system followed by classification symbols)

IPC:  H01M

Documentation searched other than minimum documentation to the extent that such documents are included in the fields searched

Electronic data base consulted during the international search (name of data base and, where practicable, search terms used)

CNABS; CNTXT; CNKI; WPABS; DWPI; USTXT; WOTXT; EPTXT: 宁德时代, 电池, 电解液, 氟代, 环状碳酸酯, 碳酸亚乙酯, 碳酸乙烯酯, 硅, battery, cell, electrolyte, fluoro, cyclic carbonate, ethylene carbonate, FEC, silicon

**C.    DOCUMENTS CONSIDERED TO BE RELEVANT**

| Category* | Citation of document, with indication, where appropriate, of the relevant passages | Relevant to claim No. |
| --- | --- | --- |
| X | CN 115548444 A (RUIPU LANJUN ENERGY CO., LTD.) 30 December 2022 (2022-12-30) description, paragraphs [0001]-[0042] | 1-12 |
| X | CN 110994022 A (HUIZHOU LIWINON NEW ENERGY TECHNOLOGY CO., LTD.) 10 April 2020 (2020-04-10) description, paragraphs [0002]-[0060] | 1-12 |
| X | CN 105406121 A (DONGGUAN SHANSHAN BATTERY MATERIALS CO., LTD.) 16 March 2016 (2016-03-16) description, paragraphs [0001]-[0079] | 1-12 |
| X | CN 105375066 A (DONGGUAN SHANSHAN BATTERY MATERIALS CO., LTD.) 02 March 2016 (2016-03-02) description, paragraphs [0001]-[0081] | 1-12 |
| A | CN 114946066 A (LG ENERGY SOLUTION, LTD.) 26 August 2022 (2022-08-26) entire document | 1-12 |
| A | KR 101952838 B1 (KIM SUNG YONG et al.) 27 February 2019 (2019-02-27) entire document | 1-12 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 September 2023** | **22 September 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/080402**

| Patent document cited in search report | | | Publication date (day/month/year) | Patent family member(s) | | | Publication date (day/month/year) |
|---|---|---|---|---|---|---|---|
| CN | 115548444 | A | 30 December 2022 | None | | | |
| CN | 110994022 | A | 10 April 2020 | CN | 110994022 | B | 29 July 2022 |
| CN | 105406121 | A | 16 March 2016 | CN | 105406121 | B | 14 August 2018 |
| CN | 105375066 | A | 02 March 2016 | CN | 105375066 | B | 12 January 2018 |
| CN | 114946066 | A | 26 August 2022 | US | 2023067792 | A1 | 02 March 2023 |
| | | | | EP | 4080638 | A1 | 26 October 2022 |
| | | | | KR | 20220030908 | A | 11 March 2022 |
| | | | | WO | 2022050712 | A1 | 10 March 2022 |
| KR | 101952838 | B1 | 27 February 2019 | None | | | |

Form PCT/ISA/210 (patent family annex) (July 2022)